Europäisches Patentamt

European Patent Office

Office européen des brevets

(11) Numéro de publication : **0 561 668 A1**

# (12) DEMANDE DE BREVET EUROPEEN

(21) Numéro de dépôt : **93400591.9**

(51) Int. Cl.[5] : **C09D 133/06,** C09D 183/04

(22) Date de dépôt : **08.03.93**

(30) Priorité : **20.03.92 FR 9203351**

(43) Date de publication de la demande :
**22.09.93 Bulletin 93/38**

(84) Etats contractants désignés :
**AT CH DE FR GB IT LI**

(71) Demandeur : **RHONE-POULENC CHIMIE
25, quai Paul Doumer
F-92408 Courbevoie Cédex (FR)**

(72) Inventeur : **Howe, Fabienne
11 rue Artaud
F-69000 Lyon (FR)**
Inventeur : **Pillon, Jean
Le Mas de Fausse
F-69970 Marennes (FR)**

(74) Mandataire : **Fabre, Madeleine-France et al
RHONE-POULENC CHIMIE Service Brevets
Chimie 25, quai Paul Doumer
F-92408 Courbevoie Cédex (FR)**

(54) **Composition aqueuse hydrofugeante et son utilisation comme formulation pour revêtement intérieur ou extérieur de surfaces diverses.**

(57)    Composition aqueuse hydrofugeante à base d'un latex d'un polymère organique filmogène (A), d'un polyorganosiloxane non réactif (B), d'un alkylsiliconate de métal alcalin (C), de pigments et/ou de charges diverses, avec un rapport pondéral A/B exprimé en sec de 40/60 à 90/10 et une concentration pigmentaire en volume de 10 à 90.

    Elle peut être utilisées pour l'obtention de revêtements pour l'hydrofugation de surfaces diverses extérieures ou intérieures.

EP 0 561 668 A1

La présente invention a pour objet une composition aqueuse hydrofugeante à base d'un polymère organique filmogène, d'un polyorganosiloxane et d'un alkylsiliconate alcalin, son procédé de préparation et son utilisation pour l'obtention de revêtement intérieur ou extérieur de surfaces diverses.

Il est connu, d'après le brevet autrichien n° 314 815, d'associer une émulsion de résine silicone, une dispersion d'un polymère acrylique et un alkylsiliconate de métal alcalin dans un formulation pour peinture permettant l'hydrofugation de materiaux de construction, tout en maintenant une perméabilité élevée de ceux-ci à la vapeur d'eau et au gaz carbonique ; les exemples de réalisation préconisent l'emploi d'un large excès d'emulsion silicone (86-87 parties en poids sec) par rapport au latex acrylique (respectivement 14-13 parties en poids sec), avec un taux relativement faible de siliconate (moins de 1 % exprimé en sec par rapport à la peinture).

La demanderesse a trouvé une composition aqueuse associant des constituants du même type, mais présentant en outre l'avantage de conduire à des revêtement, à effet perlant immédiat, pour surfaces diverses.

Selon l'invention il s'agit d'une composition aqueuse hydrofugeante à base d'un liant polymère organique (A), d'un polyorganosiloxane (B), d'un alkylsiliconate de métal alcalin (C), de pigment et/ou de charges diverses, caractérisée en ce que:

- ledit liant (A) est consitué d'un latex (dispersion aqueuse) d'un (co)polymère organique filmogène, présentant une température de transition vitreuse (Tg) de l'ordre de - 60 à + 30°C, de préférence de l'ordre de - 40 à + 20°C, (co)polymère dérivé d'une composition monomère à base d'au moins un ester saturé d'un acide carboxylique insaturé et/ou d'au moins un ester insaturé d'un acide carboxylique saturé, et/ou d'au moins un monomère vinyl aromatique, ledit latex présentant un taux d'extrait sec de l'ordre de 30 à 65 % en poids,
- ledit polyorganosiloxane (B) est une huile ou une résine non réactive ou faiblement réactive ne présentant pas plus de 1 % de son poids, de motifs réactifs susceptibles de réagir avec l'alkylsiliconate (C) et/ou de s'autoréticuler,
- le rapport ponderal (A)/(B) exprimé en sec va de 40/60 à 90/10, de préférence de 40/60 à 70/30;
- l'alkylsiliconate (C) est présent selon une quantité pondérale exprimée en sec, de l'ordre de 1 à 2,5 % par rapport à l'ensemble de la composition, et de préférence de l'ordre de 1,5 à 2 %,
- la concentration pigmentaire en volume CPV

$$CPV = \frac{Volume\ (pigments\ +\ charges)}{Volume\ (pigments\ +\ charges) + Volume\ (Asec\ +\ Bsec\ +\ C\ sec)} \times 100$$

de ladite composition est de l'ordre de 10 à 90, de préférence de l'ordre de 40 à 60.

Parmi les (co)polymères entrant dans la composition du liant (A), on peut citer notamment ceux issus de la (co)polymérisation des monomères suivants:

a) (meth)acrylates d'alkyle ou d'hydroxyalkyle, dont le radical alkyle est en $C_1$-$C_{10}$, tels que :
- (meth) acrylate de methyle
- (meth) acrylate d'ethyle ou hydroxyethyle
- (meth) acrylate de propyle ou hydroxypropyle
- (meth) acrylate de butyle ou hydroxybutyle
- (meth) acrylate de 2-ethyl hexyle
- ................

b) esters vinyliques d'acides carboxyliques saturés linéaires ou ramifiés en $C_1$-$C_{12}$, tels que :
- acétate de vinyle
- propionate de vinyle
- butyrate de vinyle
- versatate® de vinyle (mélange d'esters vinyliques d'acides α-ramifiés en $C_3$-$C_{11}$)
- pivalate de vinyle
- laurate de vinyle
- .............

c) monomères vinylaromatiques tels que:
- styrène
- α - methylstyrène
- vinyltoluene
- ..........

Peuvent en outre être présents à coté ces monomères des
- acides à insaturation oléfinique tels que l'acide acrylique, l'acide méthacrylique, l'acide itaconique, l'acide crotonique, l'acide maléique, l'acide fumarique...
- alkylesters d'acides insaturés dicarboxyliques tels que maleate, fumarate de méthyle, d'éthyle, de butyle ou de 2-éthyl hexyle...

- halogénures (chlorures, fluorures) de vinyle ou de vinylidene
- des amides ou nitriles à insaturation olefinique tels que le (meth) acrycrolinitrile, le (meth) acrylamide, le N-méthytol (meth)acrylamide
- monomères réticulants tels que le divinylbenzène, le (meth) acrylate de glycidyle....

Parmi ces (co)polymères on peut citer tout particulièrement les copolymères du styrène et de (meth) acrylate d'alkyle en $C_1$-$C_8$ (30-70/70-30) pouvant éventuellement contenir jusqu'à 10 % de leur poids d'acide carboxylique éthyleniquement insaturé.

Les quantités de divers monomères présents dans la composition monomères sont fonction de la nature desdits monomères et de la température de transition vitreuse désirée du copolymère. Lesdites quantités peuvent être facilement déterminées en appliquant par exemple la formule de FOX donnée dans Bull. An. Phys. Soc- 1956, 1, 123.

Les latex (A) sont obtenus par polymérisation en émulsion aqueuse dudit ou desdits monomère(s) en présence des divers adjuvants classiques de polymérisation en émulsion ; comme exemples d'amorceurs on peut citer les hydroperoxydes organiques tels que ceux de cumène, de diisopropyl benzène......., le persulfate d'ammonium et tout particulirement les persulfates ne libérant pas de sous-produits polluants en présence du siliconate (C) tels que le persulfate de sodium ou de potassium ; sont présents des émulsifiants anioniques tels que sels d'acides gras, alkyl ou aryl sulfates, alkyl ou aryl sulfonates, sulfosuccinates......de métaux alcalin, ou non-ioniques tels que alcools gras polyethoxylés, alkylphenolpolyethoxylés, acides gras polyéthoxylés......

Les particules de polymères organiques du latex (A) présentent généralement un diamètre moyen de l'ordre de 0, 05 μm à 1 μm.

Le composé polyorganosiloxanique B peut être choisi parmi les huiles ou les résines polyorganosiloxaniques, de préférence en émulsion dans l'eau, non réactives ou faiblement réactives.

On entend par motifs "réactifs" des motifs du type hydroxy, alcoxy, acyloxy.......... liés directement ou indirectement au silicium et susceptibles de réagir avec le composé (C) et/ou de s'autoréticuler.

Selon l'invention ledit polyorganosiloxane est considéré comme "faiblement réactif" lorsqu'il contient au plus 1 % de son poids et de préférence au plus 0,5 % de son poids desdits motifs.

Les huiles non réactives ou faiblement réactives peuvent être représentées par la formule:

$$R^1 R^2_2 \, Si \, O(Si \, R^2_2 O)_n \, Si \, R^2_2 \, R^1$$

dans laquelle

- les symboles $R^1$ sont identiques ou différents et représentent
  . un radical phényle, alkyle ou alcenyle linéaire ou ramifié contenant jusqu'à 6 atomes de carbone, éventuellement substitué par des groupes cyano ou fluoro
  . un radical hydroxy
  . un radical alcoxy en $C_1$-$C_4$
  . un radical acyloxy en $C_1$-$C_4$
- les symboles $R^2$ sont identiques ou différents et représentent un radical phényle, alkyle ou alcenyle pouvant contenir jusqu'à 6 atomes de carbone eventuellement substitué par des groupes cyano ou fluoro, au moins 80 % en nombre de l'ensemble des radicaux $R^1$ et $R^2$ représentant des radicaux methyle et moins de 1 % en nombre des radicaux $R^1$ liés aux atomes de silicium étant réactifs.

Les radicaux alkyle ou alcenyle les plus courants sont les radicaux methyle, ethyle, propyle, vinyle et 3,3,3-trifluoropropyle.

Ces huiles présentent une viscosité de l'ordre de 100 à 50.000 mPa.s à 25°C, de préférence de l'ordre de 100 à 10.000 mPa.s à 25°C.

Elles peuvent être telles quelles présentes dans la composition faisant l'objet de l'invention ou de préférence sous forme d'une émulsion huile dans l'eau stabilisée par un agent tensio-actif anionique et/ou non-ionique.

De telles émulsions sont bien connues, elles peuvent être préparées directement par polymérisation du monomère correspondant en émulsion selon un procédé décrit notamment dans les brevets US-A-2 891 920 et US-A-3 294 725; de même elles peuvent être obtenues par mise en émulsion aqueuse du polymère en stabilisant les émulsions à l'aide d'un agent tensio-actif selon un procédé décrit notamment dans les brevets FR-A-2 064 563, FR-A-2 094 322, FR-A-2 114 230 et EP-A-169 098.

Les agents tensio-actifs anioniques préférés sont les sels de métaux alcalins d'acide gras, d'alkylsulfates, d'alkylsulfonates, d'arylsulfonates, d'alkylarylsulfonates (dodecylbenzène sulfonate de sodium), de sulfosuccinate, d'alkylphosphate.

Comme agents tensio-actifs non-ioniques on peut citer les alcools gras polyethoxylés, les alkylphénolpolyethoxylés, les acides gras polyethoxylés.

Ces émulsions présentent de préférence une teneur en extrait sec inférieure à 40 % en poids.

Les résines non réactives ou faiblement réactives sont des copolymères constitués de motifs choisis parmi

ceux de formule $SiO_2$, $R'SiO_{1,5}$, $R'_2SiO$ et $R'_3SiO_{0,5}$ dans laquelle les symboles R', identiques ou différents, représentent un radical alkyle ou alcenyle en $C_1$-$C_6$, au moins 70 %, de préférence au moins 75 % des radicaux représentés par le symboles R' étant des radicaux méthyles ; en outre ces résines peuvent renfermer jusqu'à 1 % en de leur poids de radicaux réactifs (hydroxy, alcoxy, acyloxy.............) liés directement ou indirectement aux atomes de silicium ; la répartition des motifs précités est telle que ces résines ont un rapport R'/Si de l'ordre de 0,6 à 2,2, de préférence de l'ordre de 1,5 à 2,1.

Comme exemples de radicaux R' ont peut citer les radicaux méthyle, éthyle, isopropyle, t-butyle, n-hexyle.

Ces résines sont bien connues; elles peuvent être solides ou liquides.

Elles sont de préférence présentes dans la composition de l'invention sous forme d'émulsions aqueuses obtenues selon un procédé décrit notamment dans les brevets US-A-4 028 339, US-A-4 052 331, US-A-4 056 492, US-A-4 525 502 et US-A-4 717 599. Leur extrait sec est de l'ordre de 20 à 60 % de préférence de l'ordre de 40 à 50 % en poids.

Les alkylsiliconates de métal alcalin entrant dans la composition faisant l'objet de l'invention sont de préférence ceux présentant un groupe alkyle en $C_1$-$C_3$, notamment le methylsiliconate de sodium ou de potassium.

Ils se présentent généralement sous forme d'une solution aqueuse à 30 à 50 % d'extrait sec.

Parmi les pigments pouvant être présents dans la composition de l'invention, on peut citer : le dioxyde de titane, l'oxyde de zinc, le sulfure de zinc et d'une manière générale les pigments habituels colorés ou non, organiques ou de préférence minéraux à base de Cr, Cd, Fe, Zn..... . Ils sont généralement mis en oeuvre à raison de 0 à 5 % ou plus (par exemple jusqu'à 25 %) du poids total de ladite composition hydrofugeante.

Parmi les charges on peut citer : le talc, la dolomite, le carbonate de calcium, l'oxyhydrate d'aluminium.......ainsi que toutes les charges usuelles.

Elles sont généralement présentes à raison de 0 à 70 % du poids total de ladite composition hydrofugeante.

La masse représentée par les pigments et les charges correspond de préférence à 3-70 % du poids total de la composition hydrofugeante.

A côté de ces principaux constituants peuvent être présents des additifs usuels tels que

- des agents mouillants : par exemple l'hexametaphosphate de sodium, les naphtalène-sulfonates, les polyacrylates de sodium selon une quantité pouvant aller jusqu'à 1 % du poids de la composition totale;
  . des agents épaississants : par exemple des dérivés cellulosiques, les alginates, les amidons, l'acide polyacrylique, la gomme xanthane, les polyuréthannes...selon un quantité pouvant aller jusqu'à 2 % du poids de la composition totale ;
  . des agents dispersants : par exemple esters phosphoriques, sels d'acides polyacryliques, sels de polymères carboxylés ... selon une quantité pouvant aller jusqu'à 1 % du poids de la composition totale;
  . des agents fongicides : par exemple les dérivés du crésol et du phénol, les composés organo-mercuriques, organo-stanniques, les sels d'isothiazolone selon une quantité pouvant aller jusqu'à 1 % du poids de la composition totale;
  . des agents antigel tels que le methanol, les glycols...selon une quantité pouvant aller jusqu'à 3 % du poids de la composition totale;
  . des agents anti-mousses : par exemple les huiles siliconiques, les alcools, les hydrocarbures ... selon une quantité pouvant aller jusqu'à 5 % du poids de la composition totale;
  . des agents de coalescence : par exemple le white spirit, l'essence terebenthine ... selon une quantité pouvant aller jusqu'à 10 % du poids de la composition totale.

La composition hydrofugeante faisant l'objet de l'invention peut être préparée par addition des principaux constituants (A), (B) et (C) de ladite composition à une pâte pigmentaire préparée par broyage des pigments et des différentes charges en milieu aqueux.

La présente invention a également pour objet l'utilisation de la composition hydrofugeante ci-dessus décrite pour l'obtention de revêtements pour l'hydrofugation de surfaces diverses extérieures ou intérieures du type façade en béton, d'enduits pour mortier, bois,ciment ou fibrociment ....

Ladite composition peut être appliquée en l'état en utilisant des moyens usuels: rouleau de peinture, pistolet pneumatique, pinceau...

Les revêtements obtenus peuvent aller, à concentration pigmentaire en volume décroissante, des revêtements exterieurs plastiques épais (crépis) aux vernis intérieurs, en passant par les revêtements exterieurs semi-épais (utilisés notamment pour le pontage des fissures ou faiençages, le masquage d'irrégularité des supports), les peintures intérieures ou extérieures mates, les peintures intérieures ou extérieures satinées, les lasures ...

Les exemples suivants sont donnés à titre indicatif et ne peuvent être considérés comme une limite du domaine et de l'esprit de l'invention.

**Exemple :**

Dans un becher de 1,5 l on introduit sous agitation du type turbine RAYNERI® (commercialisée par RAYNERI) tournant à 100 tours/mn :
- 65 g d'eau du robinet
- 20 g d'une solution à 10 % en poids d'hexametaphosphate de sodium
- 3 g de COATEX® P 50 (sel de sodium de l'acide polyacrylique commercialisé par COATEX)
- 50 g d'une solution à 1 % en poids du RHODOPOL® 50 MD (gomme xanthane commercialisée par RHONE-POULENC).

On ajoute au mélange obtenu, sous agitation du type RAYNERI® tournant à vitesse progressive (100 à 2000 tours/mn) :
- 120 g de $TiO_2$ RL60® (commercialisé par THANN et MULHOUSE)
- 45 g de talc 20 MO® (commercialisé par la Société du TALC de LUZENAC)
- 360 g de carbonate de calcium DRB 20® (commercialisé par la Société des BLANCS MINERAUX DE PARIS)

Cette opération de broyage dure 15 minutes.

On obtient une pâte pigmentaire dans laquelle on introduit au fur et à mesure, sous agitation du type RAYNERI® tournant à vitesse dégressive (2000 à 200 tours/mn) :
- 183 g RHODOPAS DS 1003i (dispersion anionique d'un copolymère à base d'ester acrylique et de styrène commercialisé par RHONE-POULENC) dont les caractéristiques sont les suivantes :
  . extrait sec: 50 % en poids
  . viscosité BROOKFIELD à 25°C = 800 ± 300 mPas
  . température de transition vitesse: Tg = 0°C environ
  . diamètre des particules : 0,1 micron
  . densité à 20°C = 1,04
- 97 g d'émulsion de résine silicone RHODORSIL® 878 commercialisée par RHONE-POULENC, résine dont les caractérisques sont les suivantes :
  . extrait sec: 40 % en poids environ
  . densité à 25°C: 1 environ
  . pH : 3,5 environ
- 15 g de propylène glycol
- 40 g d'une solution aqueuse à 49 % en poids de methylsiliconate de potassium
- 2 g de PARMETOL K 40® (fongicide commercialisé par le laboratoire PHAGOGENE)

Le mélange obtenu est agité pendant 10 mn à une vitesse de 200 tours/mn.

On obtient ainsi une peinture dont les caractéristiques sont les suivantes:
. CPV: 60 %
. extrait sec: 65,5 % en poids
. perméabilité à la vapeur d'eau = 350 g/m²/jour (mesure selon la norme DIN-52615), ce qui correspond à un facteur Sd = 0,03 m (mesure selon la norme DIN-52615).

Le facteur Sd correspond à l'épaisseur, exprimée en mètres, d'une couche d'air qui, au repos, présenterait la même résistance à la diffusion de la vapeur d'eau qu'un matériau considéré (support béton, enduit, peinture).

. résistance à l'eau liquide : facteur W = 0,032 kg $m^{-2}$ $h^{-0,5}$ (mesure selon la norme DIN-52617).

Le facteur W correspond au coefficient de reprise d'eau liquide par capillarité du matériau.

. résistance à l'abrasion humide = 10.000 coups sans usure (mesure selon la norme AFNOR T 30082)
. effet "perlant" (hydrofuge) immédiat

On applique la peinture au pinceau sur un support en béton ou en ciment, sur une épaisseur de 250μm humides; après séchage (24 heures environ) on asperge la surface revêtue, avec de l'eau à l'aide d'une pissette; on constate que l'eau ne s'étend pas sur le support et perle immédiatement.

**Revendications**

**1)** Composition aqueuse hydrofugeante à base d'un liant polymère organique (A), d'un polyorganosiloxane (B), d'un alkylsiliconate de métal alcalin (C), de pigment et/ou de charges diverses, caractérisées en ce que :
- ledit liant (A) est constitué d'un latex (dispersion aqueuse) d'un (co)polymère organique filmogène, présentant une température de transition vitreuse (Tg) de l'ordre de - 60°C + 30°C, de préférence de l'ordre de -40 à + 20°C, (co)polymère dérivé d'une composition monomère à base d'au moins un ester saturé d'un acide carboxylique insaturé et/ou d'au moins un ester insaturé d'un acide carboxylique saturé, et/ou d'au moins un monomère vinyl aromatique, ledit latex présentant un taux d'extrait sec de l'ordre de 30 à 65 % en poids,

- ledit polyorganosiloxane (B) est une huile ou une résine non réactive ou faiblement réactive ne présentant pas plus de 1 % de son poids, de motifs réactifs susceptibles de réagir avec l'alkylsiliconate (C) et/ou de s'autoréticuler,
- le rapport ponderal (A)/(B) exprimé en sec va de 40/60 à 90/10, de préférence de 40/60 à 70/30,
- l'alkylsiliconate (C) est présent selon une quantité pondérale exprimée en sec, de l'ordre de 1 à 2,5 % par rapport à l'ensemble de la composition, et de préférence de l'ordre de 1,5 à 2 %,
- la concentration pigmentaire en volume CPV

$$CPV = \frac{Volume\ (pigments\ +\ charges)}{Volume\ (pigments\ +\ charges)\ +\ Volume\ (Asec\ +\ Bsec\ +\ C\ sec)} \times 100$$

de ladite composition est de l'ordre de 10 à 90, de préférence de l'ordre de 40 à 60.

2) Composition selon la revendication 1) caractérisée en ce que le (co)polymère entrant dans la composition du liant (A) est issu de la (co)polymérisation d'une composition monomère à base d'au moins un des monomères suivants:

- (meth)acrylates d'alkyle ou d'hydroxyalkyle, dont le radical alkyle est en $C_1$-$C_{10}$,
- esters vinyliques d'acides carboxyliques saturés linéaires ou ramifiés en $C_{1\text{-}12}$,
- monomères vinylaromatiques.

3) Composition selon la revendication 1 ou 2 caractérisée en ce que ledit (co)polymère dérive d'une composition monomère contenant de 30 à 70 parties en poids de styrène et de 70 à 30 parties en poids de (meth) acrylate d'alkyle en $C_1$-$C_8$ et éventuellement jusqu'à 10 % de son poids d'acide carboxylique ethyléniquement insaturé.

4) Composition selon l'une quelconque des revendications 1 à 3 caractérisée en ce que les particules de (co)polymère organique du latex (A) présentent un diamètre moyen de l'ordre de 0,05 $\mu$m à 1 $\mu$m.

5) Composition selon l'une quelconque des revendications précédentes caractérisées en ce que le composé polyorganosiloxane B est une huile ou une résine polyorganosiloxanique, de préférence en émulsion dans l'eau, non réactive ou faiblement réactive.

6) Composition selon la revendication 5) caractérisée en ce que le composé B est une huile polyorganosiloxanique de formule $R^1R^2_2\ Si\ O(Si\ R^2_2O)_n\ Si\ R^2_2\ R^1$ dans laquelle

- les symboles $R^1$ sont identiques ou différents et représentent
  . un radical phényle, alkyle ou alcenyle linéaire ou ramifié contenant jusqu'à 6 atomes de carbone, éventuellement substitué par des groupes cyano ou fluoro
  . un radical hydroxy
  . un radical alcoxy en $C_1$-$C_4$
  . un radical acyloxy en $C_1$-$C_4$
- les symboles $R^2$ sont identiques ou différents et représentent un radical phényle, alkyle ou alcenyle pouvant contenir jusqu'à 6 atomes de carbone eventuellement substitué par des groupes cyano ou fluoro, au moins 80 % en nombre de l'ensemble des radicaux $R^1$ et $R^2$ représentant des radicaux methyle et moins de 1 % en nombre des radicaux $R^1$ liés aux atomes de silicium étant réactifs.

7) Composition selon la revendication 5) caractérisée en ce que le composé B est une résine non réactive ou faiblement réactive copolymère constituée de motifs choisis parmi ceux de formule $SiO_2$, $R'SiO_{1,5}$, $R'_2SiO$ et $R'_3SiO_{0,5}$ dans laquelle les symboles R', identiques ou différents, représentent un radical alkyle ou alcenyle en $C_1$-$C_6$, au moins 70 %, de préférence au moins 75 % des radicaux représentés par le symboles R' étant des radicaux méthyle, ladite résine pouvant renfermer jusqu'à 1 % en de son poids de radicaux réactifs (hydroxy, alcoxy, acyloxy...) liés directement ou indirectement aux atomes de silicium , la répartition des motifs précités étant telle que ladite résine présente un rapport R'/Si de l'ordre de 0,6 à 2,2, de préférence de l'ordre de 1,5 à 2,1.

8) Composition selon l'une quelconque des revendications précédentes caractérisée en ce que l'alkylsiliconate de métal alcalin C présente en groupe alkyl en $C_1$-$C_3$, méthyle de préférence.

9) Composition selon l'une quelconque des revendications précédentes caractérisée en ce que la masse représentée par les pigments et les charges correspond à 3 - 70 % du poids total de la composition hydrogugeante.

10) Procédé de préparation de la composition faisant l'objet de l'une quelconque des revendications 1 à 6 par addition des principaux constituants (A), (B) et (C) de ladite composition à une pâte pigmentaire préparée par broyage des pigments et des différentes charges en milieu aqueux.

11) Utilisation de la composition hydrofugeante faisant l'objet de l'une quelconque des revendications 1 à 9 pour l'obtention de revêtements pour l'hydrofugation de surfaces diverses extérieures ou intérieures du type façade en béton, d'enduits pour mortier, bois, ciment ou fibrociment ...

**Office européen des brevets**

**RAPPORT DE RECHERCHE EUROPEENNE**

Numero de la demande

EP 93 40 0591

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 410 899 (RHONE-POULENC)<br>* page 3, ligne 49 - page 4, ligne 5 *<br>* page 7, ligne 11 *<br>* page 7, ligne 37 - ligne 40 *<br>* exemples 1,4,6 *<br>* revendications *<br>--- | 1-11 | C09D133/06<br>C09D183/04 |
| A | FR-A-2 526 033 (RHONE-POULENC)<br><br>* page 3, ligne 9 - ligne 12 *<br>* page 4, ligne 31 - page 5, ligne 20 *<br>* exemples 1-7 *<br>* revendications 1-12 *<br><br>----- | 1-4,10, 11 | |

|  | | | **DOMAINES TECHNIQUES RECHERCHES (Int. Cl.5)**<br><br>C09D |

Le présent rapport a été établi pour toutes les revendications

| Lieu de la recherche | Date d'achèvement de la recherche | Examinateur |
|---|---|---|
| LA HAYE | 26 MAI 1993 | ENGEL S.L.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

······························································

& : membre de la même famille, document correspondant

EPO FORM 1503 03.82 (P0402)